# EUROPÄISCHE PATENTANMELDUNG

(11) **EP 4 286 316 A1**
(43) Veröffentlichungstag der Anmeldung: **06.12.2023**
(21) Anmeldenummer: 23169390.4
(22) Anmeldetag: 24.04.2023
(51) Int. Cl.: B66F 9/06, B66F 9/075

(54) **VORRICHTUNG ZUM ERKENNEN EINES AUF EINEM UNTERFAHR-SHUTTLE GETRAGENEN LASTTRÄGERS**

(30) Priorität: 30.05.2022 DE 102022113574
(71) Anmelder: Jungheinrich Aktiengesellschaft, 22047 Hamburg (DE)
(72) Erfinder: STEGER, Fabian, 86666 Burgheim (DE); LEFFLER, Marius, 86551 Aichach (DE); WOLF, Romano, 80799 München (DE)
(74) Vertreter: Weickmann & Weickmann PartmbB

(57) **Zusammenfassung**

Die vorliegende Erfindung betrifft eine Vorrichtung (20) zum Erkennen eines auf einem Unterfahr-Shuttle (10) getragenen Lastträgers (30), umfassend ein Feld (22) von an einer Außenseite des Unterfahr-Shuttles (10) anzuordnenden Sensoreinheiten (22a - 22e), welche jeweils dazu eingerichtet sind, eine jeweilige Erfassungsposition (40a - 40e) des Lastträgers (30; 30') zu erfassen und abhängig von einem Vorliegen einer vorbestimmten Eigenschaft an der Erfassungsposition (40a - 40e) ein entsprechendes Sensorbit auszugeben, eine Speichereinheit (26), in welcher Daten hinterlegt sind, welche eine Zuordnung von Lastträger-Codes zu jeweiligen Lastträger-Typen herstellen; und eine Auswerteeinheit (24), welche mit den Sensoreinheiten (22a - 22e) und der Speichereinheit (26) betriebsmäßig gekoppelt und dazu eingerichtet ist, die von den Sensoreinheiten (22a - 22e) ausgegebenen Sensorbits zu empfangen, aus wenigstens einem Teil der Sensorbits einen Lastträger-Code zu ermitteln und auf Grundlage des Lastträger-Codes und der in der Speichereinheit (26) hinterlegten Daten den Lastträger-Typ des momentan getragenen Lastträgers (30) abzuleiten. Ferner betrifft die Erfindung ein mit einer derartigen Vorrichtung (20) ausgestattetes Unterfahr-Shuttle (10), ein aus einem derartigen Unterfahr-Shuttle (10) und einem Lastträger (30) gebildetes System sowie ein Verfahren zum Erkennen eines auf einem Unterfahr-Shuttle (10) getragenen Lastträgers (30) mittels einer solchen erfindungsgemäßen Vorrichtung (20).

## Beschreibung

Die vorliegende Erfindung betrifft eine Vorrichtung zum Erkennen eines auf einem Unterfahr-Shuttle getragenen Lastträgers, ein mit einer derartigen Vorrichtung ausgestattetes Unterfahr-Shuttle, ein aus einem derartigen Unterfahr-Shuttle und einem Lastträger gebildetes System sowie ein Verfahren zum Erkennen eines auf einem Unterfahr-Shuttle getragenen Lastträgers mittels einer solchen erfindungsgemäßen Vorrichtung.

Im Rahmen der zunehmenden Automatisierung von Logistikeinrichtungen haben in jüngerer Zeit sogenannte Unterfahr-Shuttle zunehmend an Bedeutung gewonnen, die autonom oder halb-autonom auf ihrer Oberseite Lasten transportieren können, wie beispielsweise unterschiedliche Typen von Paletten mit darauf getragenen Waren. Zur Aufnahme derartiger Lasten werden diese in eine Übergabestation von einem Unterfahr-Shuttle unterfahren und die entsprechende Ladefläche an der Oberseite des Unterfahr-Shuttles wird angehoben, bis die Last von der Übergabestation abgehoben ist, auf dem Unterfahr-Shuttle getragen wird und dann an einen vorgesehenen Ort transportiert wird und erneut übergeben werden kann. Ebenfalls sind Lastträger bekannt, die von derartigen Unterfahr-Shuttlen aufgenommen werden können und ohne Übergabestationen transportiert werden können, indem sie ähnlich einem Tisch aufgebaut sind und somit zunächst einmal auf mehreren Beinen oder Stützen aufstehen können, bevor sie von dem Shuttle in einem zentralen Abschnitt unterfahren und dann transportiert werden können. Zu diesem Zweck sind gattungsgemäße Unterfahr-Shuttle in der Regel zu einer omnidirektionalen Fortbewegung eingerichtet und werden über ein Leitsystem hinsichtlich ihres Betriebs koordiniert und angesteuert.

Da der konkrete Typ von auf solchen Unterfahr-Shuttles getragenen Lastträgern einen Einfluss auf diverse Arbeitsabläufe und/oder Betriebsparameter des Unterfahr-Shuttles haben kann, beispielsweise indem eine Anpassung eines durch Umfeldsensoren aufgespannten Schutzfelds um das Unterfahr-Shuttle herum an die Größe bzw. den Überstand des Lastträgers bezüglich einem Umriss des Unterfahr-Shuttles notwendig sein kann, ist es wünschenswert, einen Typ eines jeweiligen auf einem Unterfahr-Shuttle getragenen Lastträger automatisch erkennen zu können. Da hierbei sicherheitsrelevante Betriebsparameter des entsprechenden Unterfahr-Shuttles betroffenen sind, ist es hierbei ferner wünschenswert, die entsprechende Erkennung in einer Weise auszuführen, die fehlerhafte Erkennungen von Lastträgern mit einer hohen Zuverlässigkeit ausschließen kann. Ferner ist selbstverständlich wünschenswert, eine entsprechende Vorrichtung kostengünstig und in einer einfach zu installierenden und wartenden Weise auszuführen.

Zur Lösung dieser Aufgabe wird erfindungsgemäß eine Vorrichtung zum Erkennen eines auf einem Unterfahr-Shuttle getragenen Lastträgers vorgeschlagen, umfassend ein Feld von an einer Außenseite des Unterfahr-Shuttles anzuordnenden Sensoreinheiten, welche jeweils dazu eingerichtet sind, eine jeweilige Erfassungsposition des Lastträgers zu erfassen und abhängig von einem Vorliegen einer vorbestimmten Eigenschaft an der Erfassungsposition ein entsprechendes Sensorbit auszugeben, eine Speichereinheit, in welcher Daten hinterlegt sind, welche eine Zuordnung von Lastträger-Codes zu jeweiligen Lastträger-Typen herstellen, und eine Auswerteeinheit, welche mit den Sensoreinheiten und der Speichereinheit betriebsmäßig gekoppelt und dazu eingerichtet ist, die von den Sensoreinheiten ausgegebenen Sensorbits zu empfangen, aus wenigstens einem Teil der Sensorbits einen Lastträger-Code zu ermitteln und auf Grundlage des Lastträger-Codes und der in der Speichereinheit hinterlegten Daten den Lastträger-Typ des momentan getragenen Lastträgers abzuleiten.

Somit ist die erfindungsgemäße Vorrichtung dazu in der Lage, mit einer geringen Anzahl von Sensoreinheiten, welche in einer robusten Weise jeweils lediglich das Vorliegen oder die Abwesenheit einer vorbestimmten Eigenschaft an einer Erfassungsposition des Lastträgers zu ermitteln haben, eine ausreichende Anzahl von derartigen Sensorbits bereitzustellen, dass eine gewisse Menge von unterschiedlichen Lastträger-Codes abgeleitet werden können, welche wiederum über ein Mapping bzw. ein Abbilden von Schlüssel-Werte-Paaren das Identifizieren des Lastträger-Typs auf Grundlage der in der Speichereinheit hinterlegten Daten ermöglichen. Hierbei ist prinzipiell eine Anordnung der Sensoreinheiten seitlich am Fahrzeug denkbar, wenn entsprechende Erfassungspositionen an dem Lastträger beispielsweise an einem vertikal platzierten Blech vorgesehen sind und bei einer Aufnahme des Lastträgers zumindest annährend bündig am Fahrzeug anliegen. Eine bevorzugte Variante sieht jedoch eine Anordnung der Sensoreinheiten an einer Oberseite des Unterfahr-Shuttles vor, so dass im Folgenden in erster Linie solche Ausführungsformen vorgestellt werden.

Dementsprechend ist ein mit einer derartigen Vorrichtung zusammenwirkender Lastträger an wenigstens einer vorgesehenen Stelle mit derartigen Erfassungspositionen ausgestattet, die wiederum auf das jeweilige Funktionsprinzip der Sensoreinheit in der Vorrichtung abzustimmen sind und den entsprechenden Typ des Lastträgers kodieren, sodass die Sensoreinheiten jeweils das Vorliegen oder die Abwesenheit der vorbestimmten Eigenschaft in ein entsprechendes Sensorbit umsetzen können. Bereits an dieser Stelle soll erwähnt sein, dass als Lastträger im Sinne der vorliegenden Erfindung sowohl mit einer entsprechenden Ladung bestückbare Paletten, Tische oder sonstige Lastträger als auch mit dem Unterfahr-Shuttle mechanisch, elektrisch und/oder elektronisch verbindbare Anbaukomponenten wie beispielsweise ein sogenannter "Backpack" wirken können, welche wiederum als eine Schnittstelle für das Aufnehmen bestimmter Typen von Paletten oder Ladungen an der Oberseite des Unterfahr-Shuttles wirken können.

Wenngleich das Feld von Sensoreinheiten in im Wesentlichen beliebiger Weise ausgestaltet sein kann und die einzelnen Sensoreinheiten durchaus auch beabstandet voneinander an der Oberseite des Unterfahr-Shuttles in beliebigen räumlichen Ausrichtungen zueinander anordenbar sein können, so könnte in einer besonders einfachen Ausführung der vorliegenden Vorrichtung vorgesehen sein, die Sensoreinheiten in einer Reihe anzuordnen. Somit wird eine besonders platzsparende Integration der Sensoreinheiten an der Oberseite des Unterfahr-Shuttles ermöglicht.

Demhingegen könnte jedoch das Feld von Sensoreinheiten alternativ auch derart aufgeteilt sein, dass wenigstens eine der Sensoreinheiten beabstandet zu den verbleibenden Sensoreinheiten angeordnet ist, insbesondere bezogen auf einen Umriss des Unterfahr-Shuttles in einem diagonal gegenüberliegenden Bereich zu den verbleibenden Sensoreinheiten angeordnet ist. Hierdurch kann sichergestellt werden, dass ein entsprechender Lastträger nur in einer korrekten Ausrichtung, insbesondere hinsichtlich seines Winkels zu dem Fahrzeugkörper des Unterfahr-Shuttles, an allen seiner Erfassungspositionen von den Sensoreinheiten erfasst werden wird. Somit wird durch eine solche Aufteilung des Felds von Sensoreinheiten in eine Mehrzahl von voneinander beabstandeten und insbesondere diagonal gegenüberliegenden Gruppen von jeweils wenigstens einer Sensoreinheit ein zusätzlicher Sicherheitsmechanismus hinsichtlich einer korrekten Aufnahme des Lastträgers auf dem Unterfahr-Shuttle geschaffen.

Ferner wird durch die Anzahl der in der Vorrichtung umfassten Sensoreinheiten die Anzahl von durch die Vorrichtung verarbeitbaren Sensorbits festgelegt, was sich wiederum direkt in der Anzahl der maximal unterscheidbaren bzw. behandelbaren Lastträger-Typen niederschlägt. Da ferner, wie weiter unten erläutert werden wird, über eine reine Darstellung einer Binärzahl hinaus weitere Informationen in den Sensorbits kodierbar sein können, kann es vorteilhaft sein, wenn wenigstens fünf Sensoreinheiten in dem Feld von Sensoreinheiten umfasst sind.

Wie bereits kurz angedeutet, kann die Auswerteeinheit ferner dazu eingerichtet sein, auf Grundlage von wenigstens einem Teil der empfangenen Sensorbits eine Plausibilisierung des ermittelten Lastträger-Codes durchzuführen. Hierbei kann an unterschiedliche Techniken gedacht werden, beispielsweise kann gefordert werden, dass für die Gültigkeit eines Lastträger-Codes dieser stets gleich viele Eins-Bits wie Null-Bits umfassen muss, oder es kann ein Teil der Sensorbits zur Codierung des Lastträger-Codes verwendet werden, während die übrigen Sensorbits für eine Sicherheitsfunktion im Rahmen einer Plausibilisierung in geeigneter Weise ausgewertet werden können.

Ferner kann in der erfindungsgemäßen Vorrichtung zur vereinfachten Montage und kostengünstigen Herstellung davon vorgesehen sein, die Sensoreinheiten jeweils in identischer Weise gebildet vorzusehen, und/oder als Induktivsensoren. In einer derartigen Ausgestaltung der Sensoreinheiten als Induktivsensoren wäre dann an einem zu erkennenden Lastträger an den jeweiligen Erfassungspositionen für die einzelnen Sensoreinheiten entweder ein Abschnitt aus einem metallischen Material vorzusehen oder eine entsprechende Aussparung bzw. ein Abschnitt aus nicht-metallischem Material. Ist der Lastträger selbst aus Metall gebildet, so können die beiden Zustände entsprechend einem Null-Bit und einem Eins-Bit lastträgerseitig über Aussparungen bzw. Bohrungen realisiert werden, wobei dann "Bohrung vorhanden" einem der möglichen Zustände und "Bohrung nicht vorhanden" dem jeweils anderen Zustand entsprechen würde. Derartige Induktivsensoren haben den Vorteil, dass sie sehr robust sind und zuverlässig arbeiten.

In diesem Zusammenhang könnte ebenfalls an eine Ausführungsform gedacht werden, in der solche Induktivsensoren zusammen mit beweglichen, vorgespannten Metallstiften in einer Führung an der Außenseite des Unterfahr-Shuttles eingesetzt werden, wobei die Metallstifte bei einem Kontakt mit dem Lastträger verschoben bzw. eingedrückt werden und ihre Position mittels der Induktivsensoren erfasst wird. In einer solchen Lösung, welche mechanisch verlagerbare Elemente mit einer induktiven Messung kombiniert, könnte dementsprechend die Sensorposition ins Fahrzeuginnere verlagert werden und die Sensoranordnung könnte im Fahrzeug horizontal statt vertikal sein, falls dies beispielsweise aufgrund geometrischer Vorgaben gewünscht sein sollte.

Weiterhin betrifft die vorliegende Erfindung ein Unterfahr-Shuttle, umfassend einen Fahrzeugkörper mit einer an seiner Oberseite höhenverlagerbar vorgesehenen Tragefläche und einer Vorrichtung nach einem der vorhergehenden Ansprüche, wobei die Sensoreinheiten der Vorrichtung in die Tragefläche integriert sind. Auf diese Weise wird die für eine Funktion der Vorrichtung notwendige Integration der Sensoreinheiten an der Oberseite des Unterfahr-Shuttles in einer derartigen Weise erzielt, dass ein mit der höhenverlagerbar vorgesehenen Tragefläche versehener anhebbarer Lastträger im Erfassungsbereich der einzelnen Sensoreinheiten mit seinen Erfassungspositionen vorliegen kann.

Da für eine korrekte Erkennung des Lastträgers in auf dem Unterfahr-Shuttle getragenem Zustand eine präzise Positionierung der Erfassungspositionen bezüglich des Felds von Sensoreinheiten notwendig ist, kann es vorteilhaft sein, an der Tragefläche des Unterfahr-Shuttles wenigstens eine Zentriereinheit vorzusehen, welche dazu eingerichtet ist, einen getragenen Lastträger auf eine Sollausrichtung bezüglich der Tragefläche mechanisch zu zentrieren. Selbstverständlich könnte jedoch auch durch andere Maßnahmen sichergestellt werden, dass eine korrekte Ausrichtung der Sensoreinheiten zu den Erfassungspositionen garantiert ist, beispielsweise über eine optische Erfassung und Validierung der relativen Position eines solchen Lastträgers auf der Tragefläche.

Weiterhin kann das erfindungsgemäße Unterfahr-Shuttle ferner dazu eingerichtet sein, wenigstens einen Betriebsparameter abhängig von dem durch die Auswerteeinheit abgeleiteten Lastträger-Typ anzupassen. Hierbei kann konkret an eine Anpassung einer Größe und/oder Form von durch an dem Unterfahr-Shuttle vorgesehenen Umfeldsensoren (Scanner-Einheiten) aufgespannten Schutzbereichen gedacht werden, innerhalb welcher sich zur Vermeidung von Zusammenstößen keine externen Gegenstände befinden dürfen, oder auch an eine Festlegung einer maximalen Geschwindigkeit und insbesondere Kurvengeschwindigkeit abhängig vom erfassten Lastträgertyp, welcher wiederum einen Einfluss auf maximale Au-ßenmaße und/oder ein maximales Gewicht der auf dem Lastträger getragenen Ladung hat.

Gemäß einem weiteren Aspekt betrifft die vorliegende Erfindung ein System, gebildet aus einem Unterfahr-Shuttle der eben beschriebenen Art sowie einem Lastträger, wobei der Lastträger an wenigstens einem Abschnitt seiner Unterseite mit einem Feld von Erfassungspositionen versehen ist, welche von den Sensoreinheiten der Vorrichtung zum Erkennen des auf dem Unterfahr-Shuttle getragenen Lastträgers erfassbar sind, während der Lastträger in einer Sollausrichtung bezüglich der Tragefläche aufgenommen ist. Wie bereits weiter oben angesprochen, kann es sich bei dem Lastträger um unterschiedliche Typen von Paletten, Tischen und ähnlichem handeln, andererseits aber auch um Anbaukomponenten für die Oberseite des Unterfahr-Shuttles.

Wie ebenfalls bereits weiter oben angedeutet, kann an den Erfassungspositionen jeweils entweder eine metallische Fläche oder eine Bohrung vorliegen, um eine Erfassung mittels als Induktivsensoren ausgebildeter Sensoreinheiten zu ermöglichen. Hierbei sei an dieser Stelle darauf hingewiesen, dass in der erfindungsgemäßen Vorrichtung prinzipiell auch andere Sensortypen zum Einsatz kommen können, beispielsweise optische Sensoren, welche in ähnlicher Weise ebenfalls das Vorliegen oder die Abwesenheit einer metallischen Fläche oder andere optisch erfassbare Eigenschaften in den jeweiligen Erfassungsbereichen detektieren könnten.

Da Unterfahr-Shuttles häufig derart aufgebaut sind, dass ihre Trageflächen einen im Wesentlichen quadratischen Umriss aufweisen, um möglichst flexibel hinsichtlich möglicher Orientierungen relativ zu Lastträgern und bei einer Fortbewegung zu sein, kann es vorteilhaft sein, wenn der erfindungsgemäß zugehörige Lastträger vier identische Felder von Erfassungspositionen umfasst, um eine jeweilige Erfassung eines dieser Felder in vier um jeweils 90° gedrehten Orientierungen des Lastträgers bezüglich der Tragefläche des Unterfahr-Shuttles zu ermöglichen. Andererseits könnten in anderen Ausführungsformen mit einer niedrigeren Symmetrie auch lediglich zwei identische Felder von Erfassungspositionen vorgesehen sein, beispielsweise, wenn die Ladungsträger-Typen längliche Paletten sind, welche lediglich in zwei um 180° gegeneinander gedrehten Orientierungen aufgenommen werden können, oder sogar lediglich ein Feld von Erfassungspositionen, wenn nur eine einzelne mögliche relative Positionierung des Lastträgers bezüglich des Unterfahr-Shuttles denkbar ist.

Grundsätzlich wäre selbstverständlich auch denkbar, in umgekehrter Weise mehrere gleichartig aufgebaute Sensorfelder an dem Unterfahr-Shuttle vorzusehen, jedoch lediglich ein Feld von Erfassungspositionen an dem Lastträger, um in ähnlicher Weise eine Aufnahme des Lastträgers in mehreren Ausrichtungen zu dem Unterfahr-Shuttle zu gestatten, in welchen jeweils ein Erkennen des Lastträgers möglich ist. Diese Alternative wäre jedoch mit vergleichsweise höheren Kosten und einem höheren konstruktiven Aufwand verbunden.

Ferner ist als weitere Sicherheitsmaßnahme denkbar, sowohl die Sensoreinheiten an dem Unterfahr-Shuttle als auch das Feld von Erfassungspositionen an dem Lastträger jeweils mehrfach vorzusehen und zur erfolgreichen Erkennung eines Lastträgers vorauszusetzen, dass die jeweiligen von den entsprechenden Sensorbits repräsentierten Lastträger-Codes identisch sein müssen.

Weiterhin kann als Sicherheitsmechanismus gefordert sein, dass die zur Bestimmung des Lastträger-Codes zu verwendenden Erfassungspositionen des Lastträgers wenigstens eine Erfassungsposition umfassen, in welcher die vorbestimmte Eigenschaft vorliegt, sowie ebenfalls wenigstens eine Erfassungsposition, in welcher die vorbestimmte Eigenschaft nicht vorliegt. Dies entspricht einer Ausgabe des Felds von Sensoreinheiten, in welcher wenigstens ein Null-Bit und ein Eins-Bit vorliegt. Auf diese Weise können Fälle vermieden werden, in welchen durch eine fehlerhafte Positionierung des Lastträgers auf dem Unterfahr-Shuttle sämtliche der Sensoreinheiten das Vorliegen oder die Abwesenheit der vorbestimmten Eigenschaft melden, also beispielsweise im konkreten Fall eines Zusammenwirkens von Induktivsensoren und metallischen Abschnitten bzw. Bohrungen eine großflächige Auflage eines metallischen Abschnitts über alle Erfassungsbereiche der Sensoreinheiten bzw. eine Erfassung einer Abwesenheit von jeglichen metallischen Abschnitten in zwei denkbaren fehlerhaften Positionierungen des Lastträgers bezüglich des Felds von Sensoreinheiten.

Gemäß einem weiteren Aspekt betrifft die vorliegende Erfindung ein Verfahren zum Erkennen eines auf einem Unterfahr-Shuttle getragenen Lastträgers mittels einer erfindungsgemäßen Vorrichtung wie weiter oben beschrieben, umfassend die Schritte eines Erfassens von jeweiligen Erfassungspositionen eines Lastträgers durch das Feld von Sensoreinheiten der Vorrichtung, eines Ausgebens entsprechender Sensorbits abhängig von dem jeweiligen Erfassungsergebnis durch die Sensoreinheiten, eines Ermittelns eines Lastträger-Codes aus den Sensorbits durch die Auswerteeinheit und eines Ableitens des Lastträger-Typs des momentan getragenen Lastträgers auf Grundlage des Lastträger-Codes und der in der Speichereinheit hinterlegten Daten durch die Auswerteeinheit.

Hierbei kann im Rahmen dieses erfindungsgemäßen Verfahrens ferner verlangt werden, dass zunächst ein Anheben des Lastträgers vor dem Durchführen des Schritts des Erfassens durch die Sensoreinheiten durchgeführt wird, wobei in einem solchen Zustand sichergestellt sein sollte, dass die korrekte Positionierung des Lastträgers bezüglich der Tragefläche des Unterfahr-Shuttles und damit des Feldes von Sensoreinheiten vorliegt.

Weiterhin kann das erfindungsgemäße Verfahren nach dem Ableiten des Lastträger-Typs des momentan getragenen Lastträgers ein Ausgeben einer Anweisung zum Anpassen von wenigstens einem Betriebsparameter des Unterfahr-Shuttles abhängig von dem durch die Auswerteeinheit abgeleiteten Lastträger-Typ durch die Auswerteeinheit umfassen. Hierbei versteht sich, dass wenn beispielsweise die Auswerteeinheit der Vorrichtung mit einer zentralen Steuereinheit des Unterfahr-Shuttles integriert oder betriebsmäßig gekoppelt ist, diese Anweisung unmittelbar von der zentralen Steuereinheit weiterverwendet werden kann, um beispielsweise die oben bereits beschriebene Anpassung von Schutzfeldern oder maximal zulässigen Geschwindigkeiten vornehmen zu können.

Ferner kann, wie oben ebenfalls bereits angerissen, lediglich ein Teil der Sensorbits für die Ermittlung des Lastträger-Codes verwendet werden, während auf Grundlage der übrigen Sensorbits eine Plausibilisierung des ermittelten Lastträger-Codes durchgeführt wird.

In diesem Zusammenhang kann beispielsweise daran gedacht werden, dass die für die Plausibilisierung des ermittelten Lastträger-Codes ermittelten Sensorbits die Anzahl von für die Ermittlung des Lastträger-Codes verwendeten Sensorbits repräsentieren, in welchen die vorbestimmte Eigenschaft vorliegt, also die Anzahl von Eins-Bits bzw. Null-Bits in den für die Ermittlung des Lastträger-Codes verwendeten Sensorbits.

In einem konkreten Beispiel kann eine Gruppe von drei Sensorbits zur Ermittlung des Lastträger-Codes verwendet werden und eine Gruppe von zwei weiteren Sensorbits zur Plausibilisierung des Lastträger-Codes verwendet werden, wobei in beiden Gruppen jeweils wenigstens ein Null-Bit und ein Eins-Bit vorliegen muss und die Sensorbits zur Plausibilisierung die Anzahl von Eins-Bits in den Sensorbits zur Ermittlung repräsentieren. In einer derartigen Ausgestaltung eines erfindungsgemäßen Verfahrens können dementsprechend mittels fünf Sensorbits insgesamt sechs unterschiedliche Lastträger-Codes codiert werden, wobei durch die zusätzliche Plausibilisierung eine fehlerhafte Bestimmung des Lastträger-Typs in einem solchen Verfahren in der Praxis ausgeschlossen ist. Da diese Anzahl von unterscheidbaren Lastträger-Typen in der Regel ausreichend ist, stellt eine solche Ausführungsform mit fünf Sensoreinheiten und einer entsprechenden Verarbeitung der gelieferten Daten im Rahmen zweier Gruppen von drei bzw. zwei Sensorbits eine für die Praxis besonders geeignete, kompakte und kostengünstige Lösung mit höchster Zuverlässigkeit dar.

Zuletzt sei darauf hingewiesen, dass bei einer Ermittlung eines nicht-plausiblen Lastträger-Codes durch die Auswerteeinheit eine entsprechende Fehlermeldung ausgegeben werden kann, welche dann wiederum beispielsweise eine Warnung für eine menschliche Bedienperson eines die Funktion des Unterfahr-Shuttles überwachenden Leitsystems auslösen oder auch zum unmittelbaren Stilllegen des entsprechenden Unterfahr-Shuttles führen kann, um zunächst einmal von einem menschlichen Bediener eine Fehleranalyse ausführen zu lassen. Hierbei kann ein nicht-plausibler Lastträger-Code je nach Ausgestaltung der Ermittlung des Lastträger-Codes aus den Sensorbits beispielsweise Fälle umfassen, in welchen in der oben beschriebenen Weise sämtliche der Bits Null-Bits oder Eins-Bits sind und/oder die Gruppe von Sensorbits zur Plausibilisierung des Lastträger-Codes in Widerspruch zu der Gruppe von Sensorbits zur Ermittlung des Lastträger-Codes steht.

Weitere Merkmale und Vorteile der vorliegenden Erfindung werden aus der nachfolgenden Beschreibung von Ausführungsformen davon noch deutlicher, wenn diese zusammen mit den beiliegenden Figuren betrachtet wird. Diese zeigen im Einzelnen:
- Figur 1: eine isometrische Ansicht eines erfindungsgemäßen Unterfahr-Shuttles mit einem ersten Typ von darauf getragenem Lastträger;
- Figur 2: eine Seitenansicht des Unterfahr-Shuttles aus Figur 1 mit einem zweiten Typ von darauf getragenem Lastträger;
- Figur 3: ein Flussdiagramm eines erfindungsgemäßen Verfahrens zum Erkennen eines auf einem Unterfahr-Shuttle getragenen Lastträgers; und
- Figur 4: eine schematische Draufsicht einer alternativen Variante eines erfindungsgemäßen Unterfahr-Shuttles sowie eines zugehörigen Lastträgers.

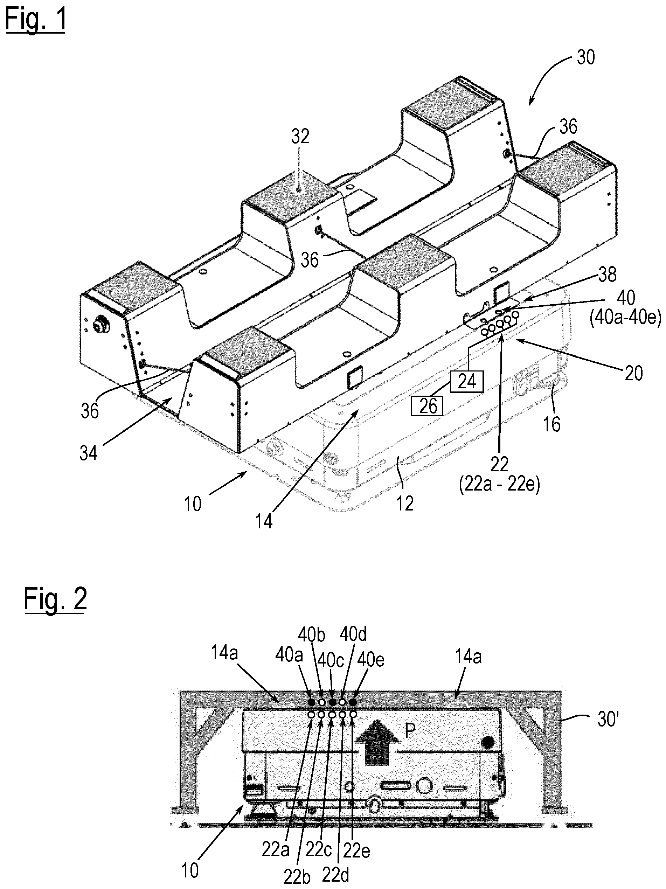

In Figur 1 ist zunächst ein erfindungsgemäßes Unterfahr-Shuttle in einer isometrischen Ansicht gezeigt und ganz allgemein mit dem Bezugszeichen 10 bezeichnet. Das Unterfahr-Shuttle 10 umfasst in bekannter Weise einen Fahrzeugkörper 12 mit einer an seiner Oberseite höhenverlagerbar vorgesehenen Tragefläche 14, einem nicht gezeigten Fortbewegungssystem, welches beispielsweise eine omnidirektionale Fortbewegung mittels einer Mehrzahl von teilweise lenkbaren, auf einem Fahruntergrund aufstehenden Rädern ermöglicht, sowie an den jeweiligen Ecken des Unterfahr-Shuttles 10 vorgesehenen Laserscannern 16, welche jeweilige Schutzfelder definieren, in welchen sich in einem regulären Betriebszustand des Unterfahr-Shuttles 10 keine externen Gegenstände befinden dürfen, um eine sichere Fahrt und Funktion davon sicherstellen zu können.

Ferner ist das Unterfahr-Shuttle 10 mit einer Vorrichtung 20 zum Erkennen eines auf dem Unterfahr-Shuttle 10 getragenen Lastträgers 30 ausgerüstet, wobei die Vorrichtung 20 ein Feld 22 von an der Oberseite des Unterfahr-Shuttles 10 angeordneten Sensoreinheiten 22a bis 22e umfasst, welche insbesondere als Induktivsensoren gleicher Bauart ausgebildet sein können. Mit diesen Sensoreinheiten 22a bis 22e ist es möglich, das Vorliegen einer vorbestimmten Eigenschaft an einer jeweiligen Erfassungsposition des Lastträgers 30 zu erfassen und ein entsprechendes Sensorbit auszugeben.

Zu diesem Zweck umfasst die Vorrichtung 20 ferner eine in Figur 1 lediglich schematisch dargestellte Auswerteeinheit 24 sowie eine dieser zugeordnete Speichereinheit 26, welche dazu eingerichtet sind, in einer weiter unten beschriebenen Art und Weise aus den von den Sensoreinheiten 22a bis 22e ausgegebenen Sensorbits zunächst einmal einen Lastträger-Code zu ermitteln und auf Grundlage dieses Lastträger-Codes und von in der Speichereinheit hinterlegten Daten den Lastträger-Typ des momentan getragenen Lastträgers 30 abzuleiten.

Hierbei sei darauf hingewiesen, dass die Auswerteeinheit 24 und/oder die Speichereinheit 26 jeweils mit einer zentralen Steuereinheit des Unterfahr-Shuttles 10 integriert oder betriebsmäßig gekoppelt sein können, so dass zum einen eine verbesserte Integration der entsprechenden Komponenten und Funktionalitäten und zum anderen eine unmittelbare Weiterverarbeitung des ermittelten Lastträger-Typs ermöglicht sind.

In der in Figur 1 gezeigten Ansicht ist der Lastträger 30 als sogenannter "Backpack" ausgebildet und dient als Schnittstelle zur Aufnahme einer Palette, insbesondere einer Europalette. Hierbei weist der Lastträger 30 eine Anzahl von Auflageabschnitten 32 auf, auf welchen die entsprechende Europalette getragen sein kann, sowie eine zentrale Ausnehmung 34, in welcher das mittlere Brett sowie die mittleren Klötze der Europalette in getragenem Zustand einliegen können. Ferner ist der Lastträger 30 mit insgesamt drei Lichtschranken 36 ausgerüstet, welche zur Sicherstellung einer korrekten Positionierung der von dem Lastträger 30 zu tragenden Palette vorgesehen sind.

Weiterhin sei darauf hingewiesen, dass dem Lastträger 30 ein metallischer Blechabschnitt 38 derart zugeordnet ist, dass er in der gezeigten Konfiguration, in welcher der Lastträger 30 an der Oberseite des Unterfahr-Shuttles 20 mittels nicht dargestellter Verbindungseinheit an der Tragefläche 14 befestigt ist, im Bereich des Felds 22 von Sensoreinheit liegt. Hierbei ist dementsprechend dem Metallblech 38 ein Feld 40 von Erfassungspositionen 40a - 40e zugeordnet, wobei an zwei der Erfassungspositionen jeweilige Bohrungen vorgesehen sind, während das übrige Metallblech 38 durchgehend gebildet ist, sodass die verbleibenden Sensoreinheiten des Felds 22 von Sensoreinheit an den entsprechenden Stellen das Vorliegen einer vorbestimmten Eigenschaft, also einer metallischen Fläche in ihrem Erfassungsbereich, feststellen werden.

Demzufolge kann durch die Anordnung und Anzahl derartiger Bohrungen in dem Feld 40 von Erfassungspositionen eine Codierung des Typs des Lastträgers 30 vorgenommen werden, welche mittels der einzelnen Sensoreinheiten 22a bis 22e des Felds 22 von Sensoreinheiten zunächst einmal in Sensorbits umgesetzt werden kann und anschließend von der Auswerteeinheit 24 auf Grundlage der in der Speichereinheit 26 hinterlegten Daten in einen Lastträgertyp übersetzt werden kann.

Figur 2 zeigt nun in einer Seitenansicht das Unterfahr-Shuttle 10 aus Figur 1, wie es einen zweiten Typ von Lastträger 30' trägt, welcher als Tisch ausgebildet ist, auf welchem beispielsweise einzelne Gegenstände ablegbar und demzufolge mittels des Unterfahr-Shuttles transportierbar sind. Hierbei ist in dieser Ansicht weiterhin zu erkennen, dass an der Tragefläche 14 des Unterfahr-Shuttles 10, welche gemäß dem in Figur 2 dargestellten Pfeil P vertikal bewegbar ist, zwei Zentriereinheiten 14a vorgesehen sind, welche mit entsprechenden Ausnehmungen in dem Lastträger 30' zusammenwirken, um eine korrekte relative Positionierung des Lastträgers 30' bezüglich des Unterfahr-Shuttles 10 und damit der Vorrichtung 20 zum Erkennen des auf dem Unterfahr-Shuttle 10 getragenen Lastträgers 30` sicherzustellen.

Von dieser Vorrichtung 20 sind in Figur 2 lediglich schematisch die fünf Sensoreinheiten 22a bis 22e angedeutet, welche in der gezeigten Konfiguration erneut einem entsprechenden Feld 40 von Erfassungspositionen 40a - 40e an dem Lastträger 30' gegenüberliegen. Da der Lastträger 30' in dem Bereich der Erfassungspositionen 40a - 40e selbst aus Metall gebildet sein kann, können an den entsprechenden Erfassungspositionen in ähnlicher Weise wie in dem Metallblech 38 aus der Ausführungsform aus Figur 1 einzelne Bohrungen in einem Feld 40 von Erfassungspositionen 40a - 40e vorgesehen sein, welche einen ersten Typ von Bit repräsentieren, während die verbleibende Metallfläche an den übrigen Erfassungspositionen für die jeweils andere Art von Bit stehen kann, wobei erneut durch eine induktive Messung durch die einzelnen Sensoreinheiten 22a - 22e zwischen den beiden möglichen Zuständen unterschieden wird. Hierbei sind in Figur 2 die Bohrungen an den Erfassungspositionen 40b und 40d durch ungefüllte Kreise angedeutet, während die durchgehenden Metallflächen an den übrigen Erfassungspositionen 40a, 40c und 40e jeweils als gefüllte Kreise dargestellt sind.

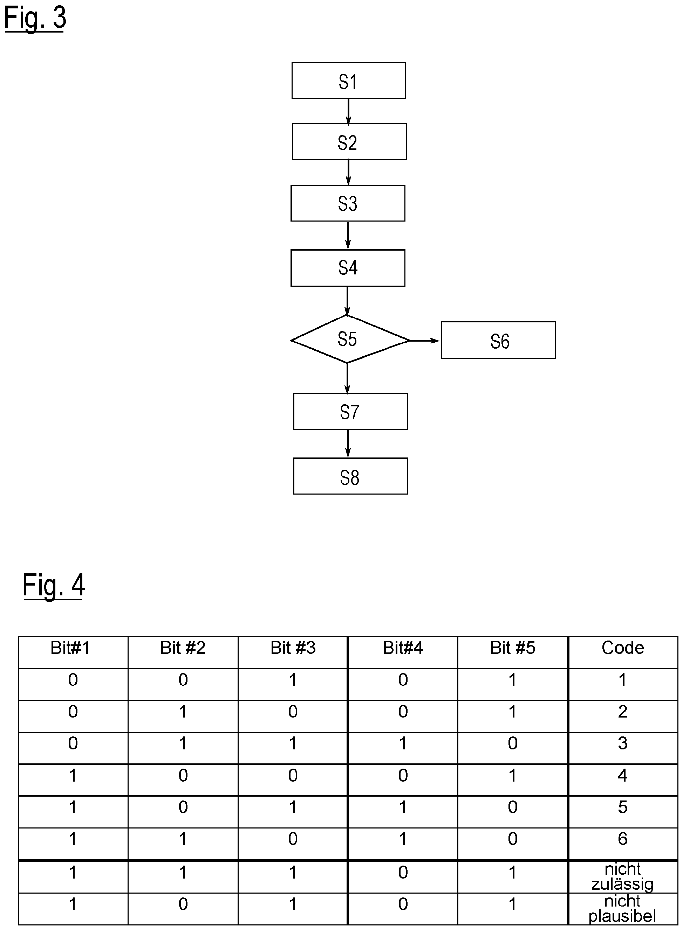

In Bezugnahme auf Figur 3 sei nun ein Verfahren erläutert, mittels welchem in den Konfigurationen aus den Figuren 1 und 2 der auf dem Unterfahr-Shuttle getragene Lastträger 30 bzw. 30` einem Lastträger-Typ zugeordnet werden kann. Zunächst einmal wird in Schritt S1 der jeweilige Lastträger 30 an der Oberseite des Unterfahr-Shuttles 10 montiert bzw. die Tragefläche 14 angehoben, um den Lastträger 30' in korrekter relativer Positionierung anzuheben. Anschließend erfassen in Schritt S2 die Sensoreinheiten 22a bis 22e ihre jeweiligen Erfassungspositionen an dem Lastträger 30 bzw. 30' und geben in Schritt S3 entsprechende Sensorbits abhängig von dem jeweiligen Erfassungsergebnis an die Auswerteeinheit 24 aus.

Diese Auswerteeinheit 24 wendet nun einen geeigneten Algorithmus an, um in Schritt S4 aus den Sensorbits einen Lastträger-Code zu ermitteln, wobei anschließend in Schritt S5 eine Plausibilisierung des derart ermittelten Lastträger-Codes stattfindet. Stellt sich bei dieser Plausibilisierung in Schritt S5 heraus, dass der ermittelte Lastträger-Code nicht plausibel ist ("nein" in Schritt D5), so wird in Schritt S6 durch die Auswerteeinheit eine entsprechende Fehlermeldung ausgegeben, welche je nach Ausführungsform bzw. Variante ein Stilllegen des Unterfahr-Shuttles 10, die Anforderung einer manuellen Überprüfung durch eine Bedienperson oder ähnliches auslösen kann.

Wird demhingegen in Schritt S5 festgestellt, dass der ermittelte Lastträger-Code plausibel ist ("ja" in Schritt S5), so wird durch die Auswerteeinheit 24 in Schritt S7 aus dem Lastträger-Code und den in der Speichereinheit 26 hinterlegten Daten der Lastträger-Typ abgeleitet, also beispielsweise erkannt, ob es sich um den Lastträger 30 aus Figur 1 oder den Lastträger 30' aus Figur 2 handelt. Abhängig von dem abgeleiteten Lastträger-Typ kann schlussendlich in Schritt S8 eine Anpassung von wenigstens einem Betriebsparameter des Unterfahr-Shuttles 10 stattfinden, beispielsweise eine Anpassung der Schutzfelder der Scanner-Einheiten 16 oder eine Festlegung einer maximalen Geschwindigkeit oder Kurvengeschwindigkeit des Antriebssystems des Unterfahr-Shuttles 10.

Weiterhin sei auf die nachfolgende Tabelle 1 verwiesen, in welcher eine konkrete Implementierung der Lastträger-Codes sowie der Plausibilisierungs-Bits erläutert ist. Hierbei dienen die ersten bis dritten Sensorbits, die in der in Figuren 1 und 2 gezeigten Ausführungsform der Vorrichtung 20 beispielsweise von den Sensoreinheiten 22a bis 22c geliefert werden können, der Ermittlung des Lastträger-Codes, während die vierten und fünften Sensorbits, entsprechend den Sensoreinheiten 22d und 22e, der Plausibilisierung dienen.

**Tabelle 1**

| Bit#1 | Bit#2 | Bit#3 | Bit#4 | Bit#5 | Code |
|---|---|---|---|---|---|
| 0 | 0 | 1 | 0 | 1 | 1 |
| 0 | 1 | 0 | 0 | 1 | 2 |
| 0 | 1 | 1 | 1 | 0 | 3 |
| 1 | 0 | 0 | 0 | 1 | 4 |
| 1 | 0 | 1 | 1 | 0 | 5 |
| 1 | 1 | 0 | 1 | 0 | 6 |
| 1 | 1 | 1 | 0 | 1 | nicht zulässig |
| 1 | 0 | 1 | 0 | 1 | nicht plausibel |

Hierbei sei darauf verwiesen, dass gemäß dieser Ausführungsform insgesamt sechs Lastträger-Typen unterschieden werden können, da in den fünf Sensorbits zusätzliche Sicherheitsfunktionen implementiert sind, welche zwar die Anzahl der zur Codierung der Lastträgertypen verfügbaren Kombinationen reduzieren, jedoch für eine deutlich erhöhte Sicherheit sorgen.

Insbesondere sind in den zulässigen Kombinationen von Sensorbits, die in den Zeilen 1 bis 6 der Tabelle dargestellt sind und dementsprechend den sechs unterschiedlichen möglichen kodierbaren Lastträgertypen entsprechen, sowohl in den ersten bis dritten Bits als auch in dem vierten und fünften Bit stets jeweils wenigstens ein Eins-Bit und ein Null-Bit enthalten, sodass unter keinen Umständen sämtliche Bits in einer der beiden Gruppen als Eins oder als Null vorliegen. Weiterhin stellen die zur Plausibilisierung der ermittelten Lastträger-Codes verwendeten Sensorbits 4 und 5 jeweils die Anzahl der in den zur Ermittlung des Lastträger-Codes verwendeten ersten bis dritten Sensorbits vorliegenden Eins-Bits dar, da die Zeilen 1, 2 und 4 der Tabelle 1 jeweils in den ersten bis dritten Bits ein einzelnes Eins-Bit und zwei Null-Bits umfassen, während in den Zeilen 3, 5 und 6 jeweils zwei Eins-Bits und ein Null-Bit vorliegen.

Diese Beziehung wird durch die vierten und fünften Bits plausibilisiert, die dementsprechend eine Parität der ersten bis dritten Bits abbilden. Lediglich zum Vergleich sind in Tabelle 1 noch eine siebte und achte Zeile eingefügt, welche beide keine zulässige bzw. plausible Kombination von Sensorbits darstellen und demzufolge in dem Verfahren aus Figur 3 in Schritt S5 zur Ausgabe einer Fehlermeldung führen würden, da in Zeile 7 sämtliche ersten bis dritten Bits jeweils identisch sind und auch nicht mit den Paritätsbits 4 und 5 kompatibel sind, während in der achten Zeile zwar eine zulässige Kombination von Eins- und Null-Bits in den ersten bis dritten Bits vorliegt, diese jedoch nicht plausibel mit den vierten und fünften Paritätsbits in der oben beschriebenen Weise ist.

Figur 4 zeigt zuletzt eine schematische Draufsicht einer alternativen Variante eines erfindungsgemäßen Unterfahr-Shuttles 10` sowie eines zugehörigen Lastträgers 30", wobei an dieser Stelle lediglich auf die Unterschiede zu der Variante aus Figur 1 eingegangen werden soll und die in diesem Zusammenhang beschriebenen Komponenten jeweils mit gleichen Bezugszeichen, jeweils ergänzt um einen Apostroph bezeichnet sind. Für eine Beschreibung der übrigen Komponenten und der prinzipiellen Funktionsweise des Unterfahr-Shuttles 10' sowie der ihm zugeordneten Vorrichtung 20' zum Erkennen des auf dem Unterfahr-Shuttle 10` aufgenommenen Lastträgers 30" sei auf die obigen Betrachtungen im Zusammenhang mit den Figuren 1 bis 3 verwiesen.

Dementsprechend sei darauf hingewiesen, dass die in dem Unterfahr-Shuttle 10' verwendete Vorrichtung 20' zum Erkennen des auf dem Unterfahr-Shuttle 10' aufgenommenen Lastträgers 30" im Gegensatz zu derjenigen aus Figur 1 hinsichtlich ihres Felds von Sensoreinheiten 22a' - 22e` derart aufgebaut ist, dass das Feld zwei beabstandete Gruppen 22a' und 22b' sowie 22c` - 22e` von Sensoreinheiten umfasst, die sich bezogen auf den Umriss des Unterfahr-Shuttles 10' diagonal gegenüberliegen.

Der Vorteil dieser verteilten Anordnung der Sensoreinheiten 22a' - 22e` besteht darin, dass lediglich dann, wenn eine korrekte Ausrichtung des Lastträgers 30" bezüglich des Unterfahr-Shuttles 10' vorliegt, eine Erkennung sämtlicher der entsprechenden Erfassungspositionen 40a' - 40e` an dem Lastträger 30" stattfinden wird. Zur Verdeutlichung dieses zusätzlichen Sicherheitsmechanismus ist in Figur 4 der Lastträger 30" um einen Winkel von lediglich 3° gegenüber seiner Soll-Ausrichtung bezüglich des Unterfahr-Shuttles 10' verdreht dargestellt, und es zeigt sich, dass wenngleich die beiden Erfassungspositionen 40a' und 40b` noch von den entsprechenden Sensoreinheiten 22a' und 22b' erkannt werden, dies für die weiteren Erfassungspositionen 40c` - 40e` nicht mehr gilt, die nunmehr außerhalb des jeweiligen Sensorbereichs der Sensoreinheiten 20c' - 20e` liegen.

Ferner sind in Figur 4 noch drei zusätzliche nicht an dem Lastträger 30 vorgesehene und daher ausgekreuzte hypothetische Erfassungspositionen 40F dargestellt, welche einer linearen Anordnung der Erfassungsbereiche analog zu der Variante aus Figur 1 entsprechen würden. Anhand dieser lässt sich erahnen, dass diese nicht vorgesehenen Erfassungsbereiche ebenfalls von entsprechend in einer linearen Verlängerung der Sensoreinheiten 22a', 22b` angeordneten zusätzlichen Sensoreinheiten erfasst würden, da der Winkel von 3° zwischen dem Lastträger 30" und dem Unterfahr-Shuttle 10' zu klein ist, um in dem entsprechend kleinen, von den Erfassungspositionen 40F abgedeckten Bereich einen bedeutenden Versatz gegenüber den entsprechenden Sensoreinheiten zu erzielen.

Demhingegen reicht durch den erhöhten Abstand zwischen den Gruppen von Erfassungspositionen 40a', 40b' und 40c' - 40e die hierdurch resultierende Verlagerung gegenüber der korrekten Position des Lastträgers 30" aus, um die Erfassungspositionen 40c' - 40e` aus dem Sensorbereich der Sensoreinheiten 22c` - 22e` herauszubewegen. Demzufolge kann dementsprechend beispielsweise gemäß des oben diskutierten Funktionsprinzips mithilfe der Plausibilisierungs-Bits eine fehlerhafte Positionierung des Lastträgers 30" gegenüber dem Unterfahr-Shuttle 10' festgestellt und entsprechende Gegenmaßnahmen getroffen werden.

## Patentansprüche

1. Vorrichtung (20; 20') zum Erkennen eines auf einem Unterfahr-Shuttle (10; 10') getragenen Lastträgers (30; 30'; 30"), umfassend:
- ein Feld (22) von an einer Außenseite des Unterfahr-Shuttles (10; 10') anzuordnenden Sensoreinheiten (22a - 22e; 22a' - 22e`), welche jeweils dazu eingerichtet sind, eine jeweilige Erfassungsposition (40a - 40e; 40a' - 40e') des Lastträgers (30; 30'; 30") zu erfassen und abhängig von einem Vorliegen einer vorbestimmten Eigenschaft an der Erfassungsposition (40a - 40e; 40a' - 40e') ein entsprechendes Sensorbit auszugeben;
- eine Speichereinheit (26), in welcher Daten hinterlegt sind, welche eine Zuordnung von Lastträger-Codes zu jeweiligen Lastträger-Typen herstellen; und
- eine Auswerteeinheit (24), welche mit den Sensoreinheiten (22a - 22e; 22a' - 22e') und der Speichereinheit (26) betriebsmäßig gekoppelt und dazu eingerichtet ist, die von den Sensoreinheiten (22a - 22e; 22a' - 22e') ausgegebenen Sensorbits zu empfangen, aus wenigstens einem Teil der Sensorbits einen Lastträger-Code zu ermitteln und auf Grundlage des Lastträger-Codes und der in der Speichereinheit (26) hinterlegten Daten den Lastträger-Typ des momentan getragenen Lastträgers (30; 30; 30‴) abzuleiten.

2. Vorrichtung (20) nach Anspruch 1,
wobei die Sensoreinheiten (22a - 22e) in einer Reihe angeordnet sind, oder
wobei das Feld von Sensoreinheiten (20a` - 20e') derart aufgeteilt ist, dass wenigstens eine der Sensoreinheiten (20a', 20b') beabstandet zu den verbleibenden Sensoreinheiten (20c' - 20e') angeordnet ist, insbesondere bezogen auf einen Umriss des Unterfahr-Shuttles (10`) in einem diagonal gegenüberliegenden Bereich zu den verbleibenden Sensoreinheiten (20c' - 20e') angeordnet ist.

3. Vorrichtung (20; 20') nach einem der vorhergehenden Ansprüche, wobei wenigstens 5 Sensoreinheiten (22a - 22e; 22a' - 22e') in dem Feld (22) von Sensoreinheiten (22a - 22e; 22a' - 22e') umfasst sind.

4. Vorrichtung (20; 20') nach einem der vorhergehenden Ansprüche, wobei die Auswerteeinheit (24) ferner dazu eingerichtet ist, auf Grundlage von wenigstens einem Teil der empfangenen Sensorbits eine Plausibilisierung des ermittelten Lastträger-Codes durchzuführen.

5. Vorrichtung (20; 20') nach einem der vorhergehenden Ansprüche, wobei die Sensoreinheiten (22a - 22e; 22a' - 22e') jeweils in identischer Weise gebildet sind und/oder als Induktivsensoren.

6. Unterfahr-Shuttle (10; 10'), umfassend einen Fahrzeugkörper (12) mit einer an seiner Oberseite höhenverlagerbar vorgesehenen Tragefläche (14) und einer Vorrichtung (20; 20') nach einem der vorhergehenden Ansprüche, wobei die Sensoreinheiten (22a - 22e; 22a' - 22e`) der Vorrichtung (20; 20') in die Tragefläche (14) integriert sind.

7. Unterfahr-Shuttle (10; 10') nach dem vorhergehenden Anspruch,
wobei an der Tragefläche (14) wenigstens eine Zentriereinheit (14a) vorgesehen ist, welche dazu eingerichtet ist, einen getragenen Lastträger (30'; 30") auf eine Sollausrichtung bezüglich der Tragefläche (14) zu zentrieren.

8. Unterfahr-Shuttle (10; 10') nach einem der Ansprüche 6 und 7,
wobei das Unterfahr-Shuttle (10; 10') ferner dazu eingerichtet ist, wenigstens einen Betriebsparameter abhängig von dem durch die Auswerteeinheit (24) abgeleiteten Lastträger-Typ anzupassen,
wobei vorzugsweise der wenigstens eine Betriebsparameter eine Größe von wenigstens einem Schutzfeld des Unterfahr-Shuttles (10; 10') und/oder eine maximale Geschwindigkeit des Unterfahr-Shuttles (10; 10') umfasst, insbesondere eine maximale Kurvengeschwindigkeit.

9. System, gebildet aus einem Unterfahr-Shuttle (10; 10') nach einem der Ansprüche 6 bis 8 und einem Lastträger (30; 30'; 30"), wobei der Lastträger (30; 30'; 30") an wenigstens einem Abschnitt seiner Unterseite mit einem Feld (40) von Erfassungspositionen (40a - 40e; 40a' - 40e`) versehen ist, welche von den Sensoreinheiten (22a - 22e; 22a' - 22e`) der Vorrichtung (20; 20') zum Erkennen des auf dem Unterfahr-Shuttle (10; 10') getragenen Lastträgers (30; 30'; 30") erfassbar sind, während der Lastträger (30; 30'; 30") in einer Sollausrichtung bezüglich der Tragefläche (14) aufgenommen ist,
wobei vorzugsweise an den Erfassungspositionen (40a - 40e; 40a` - 40e') jeweils entweder eine metallische Fläche oder eine Bohrung vorliegt.

10. System nach Anspruch 9,
wobei der Lastträger (30; 30') ein, zwei oder vier identische Felder (40) von Erfassungspositionen (40a - 40e) umfasst.

11. System nach einem der Ansprüche 9 und 10,
wobei die zur Bestimmung des Lastträger-Codes zu verwendenden Erfassungspositionen (40a - 40e; 40a' - 40e') wenigstens eine Erfassungsposition (40a - 40e; 40a' - 40e') umfassen, in welcher die vorbestimmte Eigenschaft vorliegt, sowie ebenfalls wenigstens eine Erfassungsposition (40a - 40e; 40a' - 40e`), in welcher die vorbestimmte Eigenschaft nicht vorliegt.

12. Verfahren zum Erkennen eines auf einem Unterfahr-Shuttle (10; 10') getragenen Lastträgers (30; 30'; 30") mittels einer Vorrichtung (20; 20') nach einem der Ansprüche 1 bis 5,
umfassend die folgenden Schritte:
- Erfassen von jeweiligen Erfassungspositionen (40a - 40e; 40a' - 40e`) eines Lastträgers (30; 30'; 30") durch das Feld (22) von Sensoreinheiten (22a - 22e; 22a' - 22e`) der Vorrichtung (20; 20');
- Ausgeben entsprechender Sensorbits abhängig von dem jeweiligen Erfassungsergebnis durch die Sensoreinheiten (22a - 22e; 22a' - 22e');
- Ermitteln eines Lastträger-Codes aus den Sensorbits durch die Auswerteeinheit (24); und
- Ableiten des Lastträger-Typs des momentan getragenen Lastträgers (30; 30'; 30') auf Grundlage des Lastträger-Codes und der in der Speichereinheit (26) hinterlegten Daten durch die Auswerteeinheit (24), vorzugsweise ferner umfassend ein Anheben des Lastträgers (30; 30'; 30') vor dem Durchführen des Schritts des Erfassens durch die Sensoreinheiten (22a - 22e; 22a' - 22e`).

13. Verfahren nach Anspruch 12,
ferner umfassend ein Ausgeben einer Anweisung zum Anpassen von wenigstens einem Betriebsparameter abhängig von dem durch die Auswerteeinheit (24) abgeleiteten Lastträger-Typ durch die Auswerteeinheit (24).

14. Verfahren nach einem der Ansprüche 12 und 13,
wobei lediglich ein Teil der Sensorbits für die Ermittlung des Lastträger-Codes verwendet wird, während auf Grundlage der übrigen Sensorbits eine Plausibilisierung des ermittelten Lastträger-Codes durchgeführt wird, wobei vorzugsweise die für die Plausibilisierung des ermittelten Lastträger-Codes verwendeten Sensorbits die Anzahl von für die Ermittlung des Lastträger-Codes verwendeten Sensorbits repräsentieren, in welchen die vorbestimmte Eigenschaft vorliegt.

15. Verfahren nach einem der Ansprüche 12 bis 14,
wobei eine Gruppe von drei Sensorbits zur Ermittlung des Lastträger-Codes verwendet wird und eine Gruppe von zwei Sensorbits zu Plausibilisierung des Lastträger-Codes verwendet wird, wobei in beiden Gruppen jeweils wenigstens ein Null-Bit und ein Eins-Bit vorliegt und die Sensorbits zur Plausibilisierung die Anzahl von Eins-Bits in den Sensorbits zur Ermittlung repräsentieren, und/oder
wobei bei einer Ermittlung eines nicht plausiblen Lastträger-Codes durch die Auswerteeinheit (24) eine entsprechende Fehlermeldung ausgegeben wird.
